Europäisches Patentamt

European Patent Office

Office européen des brevets

(11) Numéro de publication: **0 274 952 B1**

# FASCICULE DE BREVET EUROPEEN

(45) Date de publication de fascicule du brevet:
25.09.91

(51) Int. Cl.⁵: **F16K 17/16**

(21) Numéro de dépôt: **87402866.5**

(22) Date de dépôt: **15.12.87**

(54) Dipositif de sécurité à membrane à couteau d'éclatement amont actif.

(30) Priorité: **18.12.86 FR 8617728**

(43) Date de publication de la demande:
**20.07.88 Bulletin 88/29**

(45) Mention de la délivrance du brevet:
**25.09.91 Bulletin 91/39**

(84) Etats contractants désignés:
**BE CH DE GB IT LI NL**

(56) Documents cités:
**EP-A- 122 851**
**US-A- 3 989 057**
**US-A- 4 434 905**
**US-A- 4 479 587**

(73) Titulaire: **ELECTRICITE DE FRANCE Service National**
**2, rue Louis Murat**
**F-75008 Paris(FR)**

(72) Inventeur: **Oberlin, Claude**
**24, Avenue du Général de Gaulle**
**F-77210 Avon(FR)**
Inventeur: **Le Bras, Jean**
**8, rue de l'Epinoy**
**Ville Saint Jacques F-77130 Montereau(FR)**

(74) Mandataire: **Mongrédien, André et al**
**c/o BREVATOME 25, rue de Ponthieu**
**F-75008 Paris(FR)**

## Description

La présente invention concerne un dispositif de sécurité à membrane et à couteau d'éclatement, destiné à limiter la pression d'un fluide.

Elle s'applique notamment à la protection d'installation contenant un fluide (c'est-à-dire un liquide ou un gaz) contre les effets de surpressions, notamment dans des installations comprenant des circuits de décharge de grands diamètres et des pressions de service et d'éclatement des membranes faibles.

On connaît un dispositif de sécurité à membrane et à couteau d'éclatement, destiné à limiter la pression d'un fluide, décrit dans le document EP-A-122851. Dans ce dispositif, la membrane peut éclater sur un couteau selon deux modes ; l'un est appelé mode passif et l'autre mode actif.

Dans le premier mode, le couteau situé en aval de la membrane est monté fixe dans le dispositif. La membrane ne peut s'éclater qu'après s'être suffisamment déformée en direction du couteau lorsque la pression atteint une valeur prédéterminée appelée "pression d'éclatement" définie par un préréglage de la distance entre le couteau et la membrane. Ce dispositif a donc un fonctionnement qui ne peut être que passif, c'est-à-dire absolument tributaire de l'évolution de l'amplitude de la pression en fonction du temps dans l'installation protégée.

Dans le second mode, le couteau est monté sur un piston. Cet ensemble est situé en aval de la membrane dans le dispositif de sécurité. Par la mise en mouvement du piston, commandé par une pression de fluide, le couteau provoque l'éclatement de la membrane à une valeur de pression nettement inférieure à celle obtenue en mode passif.

Sur un dispositif de sécurité pouvant fonctionner en mode actif, le mode passif est préservé.

Un tel dispositif assure un fonctionnement généralement satisfaisant. Cependant, dans certaines conditions particulières, il ne permet pas d'assurer de manière sûre et efficace une déchirure complète de la membrane. Il en est ainsi en particulier dans le cas où l'on souhaite limiter la pression de rupture à une faible valeur, inférieure à 5 bars et où la canalisation présente un diamètre important de manière à assurer un grand débit. En effet, dans ce cas, le dimensionnement de la membrane conduit à donner à celle-ci une faible épaisseur; par suite, lorsqu'un couteau actif situé en amont de cette membrane vient la percuter, elle pourrait se retourner sans provoquer une rupture véritablement nette.

La présente invention a justement pour objet un dispositif de sécurité à couteau d'éclatement qui résout ces inconvénients.

De manière plus précise, l'invention concerne un dispositif de sécurité connu du EP-A-122851 et destiné à limiter la pression d'un fluide à une valeur prédéterminée, comprenant une membrane préformée et montée à l'intérieur d'un conduit qui comprend au moins un élément modulaire creux ouvert à ses deux extrémités, et pour chaque élément modulaire, des moyens d'étanchéité montés auxdites extrémités, ladite membrane préformée étant montée comme obturateur étanche de l'une des extrémités dudit élément modulaire et présente une face convexe et une face concave, comprenant un couteau passif monté en regard de la face convexe de la membrane à une distance telle de cette face convexe qu'une pression prédéterminée exercée par ledit fluide sur la face concave de ladite membrane amène cette dernière au contact du couteau, lequel provoque alors l'éclatement de cette membrane, et comprenant en outre au moins un couteau actif et des moyens pour faire percuter la membrane par ledit couteau actif afin de provoquer la déchirure de ladite membrane lorsque la face concave de cette membrane est soumise de la part du fluide à une pression inférieure à ladite pression prédéterminée, lesdits moyens pour faire percuter la membrane par le couteau actif comportant une partie mobile susceptible de se déplacer vers ladite membrane et le couteau actif étant rendu solidaire de cette partie mobile et ayant une position réglable par rapport à celle-ci, chacun desdits couteaux et comportant une pluralité de lames. Selon l'invention, ledit couteau actif est disposé additionnellement et monté en regard de la face concave de la membrane, le couteau passif situé en regard de la face convexe et le couteau actif situé en regard de la face concave étant montés de manière à ce que les lames du couteau passif s'intercalent entre les lames du couteau actif lorsque le couteau actif percute la membrane.

Grâce à ce dispositif, on peut dimensionner le disque pour obtenir une bonne tenue mécanique de ce dernier. La rupture du disque peut être provoquée pour les modes de fonctionnement passif et actif, mais le mode de fonctionnement passif est toujours préservé.

Pour le mode de fonctionnement passif, l'éclatement du disque est uniquement tributaire des conditions de pression en amont. La valeur de la pression d'éclatement ne peut excéder la pression de calcul de l'installation protégée. En revanche, pour le mode de fonctionnement actif, on peut obtenir l'éclatement du disque à une valeur de pression qui peut être nettement inférieure à la pression d'éclatement du mode passif.

De préférence, les lames du couteau amont sont disposées radialement par rapport à un axe longitudinal du conduit.

D'autres caractéristiques et avantages de l'invention apparaîtront encore à la lecture de la description qui suit d'un exemple de réalisation donné à titre illustratif en référence aux figures annexées, sur lesquelles :

- la figure 1 est une vue schématique d'un dispositif d'éclatement à couteau amont actif conforme à la présente invention ;
- la figure 2 est une vue schématique en coupe des moyens pour faire percuter la membrane par le couteau actif ;
- la figure 3 est une vue en bout d'un mode de réalisation particulier de couteau actif ; et
- la figure 4 est un schéma de principe qui illustre la commande des moyens pour faire percuter le couteau.

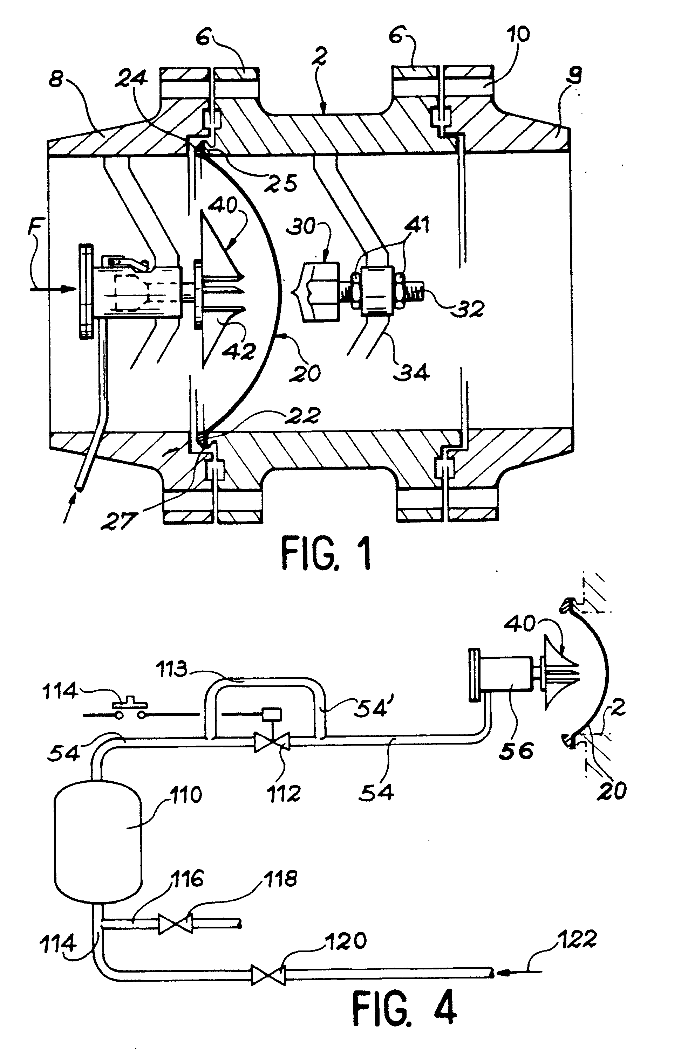

On a représenté sur la figure 1 un mode de réalisation particulier d'un dispositif de sécurité conforme à l'invention destiné à limiter la pression d'un fluide à une valeur prédéterminée. Ce dispositif est logé à l'intérieur d'un conduit relié d'une part à une zone de haute pression située en amont du conduit, représentée à gauche sur la figure 1 et d'autre part à un zone de basse pression située en aval du conduit et représentée à droite sur la figure 1.

Dans l'exemple de réalisation représenté, afin de faciliter l'installation du dispositif, on a intercalé sur le conduit des éléments modulaires tels que l'élément 2. Chaque élément se présente sous la forme d'un corps creux cylindrique et comportant des extrémités ouvertes terminées respectivement par des brides prévues pour le raccordement de l'élément modulaire 2 à un autre élément modulaire ou à une canalisation 8 ou 9 terminée par une bride complémentaire à celle de l'élément modulaire auquel elle est destinée à être raccordée. Sur l'exemple décrit et représenté sur la figure 1, la canalisation amont est reliée à l'installation à protéger, tandis que la canalisation 9 est reliée à une bâche d'évacuation.

Des moyens d'assemblages entre les brides sont prévus ; il comprennent par exemple des boulons passant dans des trous 10 ménagés dans ces brides, ainsi que des rondelles de sécurité et des écrous de serrage (non représentés).

Des moyens d'étanchéité, constitués par exemple par des joints, sont montés aux extrémités de l'élément modulaire 2, de façon à réaliser une étanchéité classique du fluide vers l'extérieur.

Le dispositif de sécurité conforme à l'invention comporte tout d'abord une membrane 20 en forme de calotte sphérique. La membrane comporte sur son pourtour une collerette périphérique 22 raccordée à la calotte sphérique. La membrane est réalisée en un métal approprié, ou en un matériau non métallique. Elle est par exemple obtenue par formage hydraulique à partir d'un flanc métallique.

Chaque membrane est associée à un anneau de renfort 24 par exemple métallique et monté de façon que la collerette périphérique 22 correspondante soit prise entre cet anneau et un épaulement 25 de la bride de l'extrémité à laquelle se trouve la membrane. La collerette périphérique, l'anneau et l'épaulement 25 sont assemblés par une soudure à lèvres 27 qui réalise l'étanchéité entre l'amont et l'aval de la membrane. L'anneau de renfort 24 est conçu pour épouser parfaitement le raccordement entre la calotte hémisphérique et la collerette périphérique. Cet anneau permet de rigidifier le raccordement pour que la membrane corespondante puisse supporter les contraintes induites et ne se retourne pas lors d'une mise sous vide de la canalisation 8 ou d'ne vidange rapide de l'installation protégée, cette vidange provoquant un effet de siphonnage.

La face concave de la membrane est orientée vers le côté amont de l'installation, tandis que la face convexe est orientée vers le coté aval. La pression du fluide, symbolisée par la flèche F, s'exerce sur la face concave de la membrane.

Le dispositif conforme à l'invention comporte en outre un couteau passif, désigné par la référence 30, montée à l'extrémité d'une tige filetée 32 vissée dans un trou taraudé prévu dans une traverse 34 fixée à chacune de ses extrémités à l'élément modulaire 2. La rotation de la tige filetée 32 permet d'avancer ou de reculer l'extrémité du couteau 30 par rapport à la membrane 20, ce qui permet de régler la pression pour laquelle la membrane sera déchirée par le couteau. En effet, plus le couteau passif 30 sera éloigné de la membrane à l'état de repos, plus une déformation importante de cette membrane sera nécessaire sous l'effet de la pression F pour que la paroi de la membrane parvienne au contact du couteau et soit entaillée. Au contraire, plus le couteau 30 sera situé près de la paroi de la membrane, plus la pression d'éclatement sera faible.

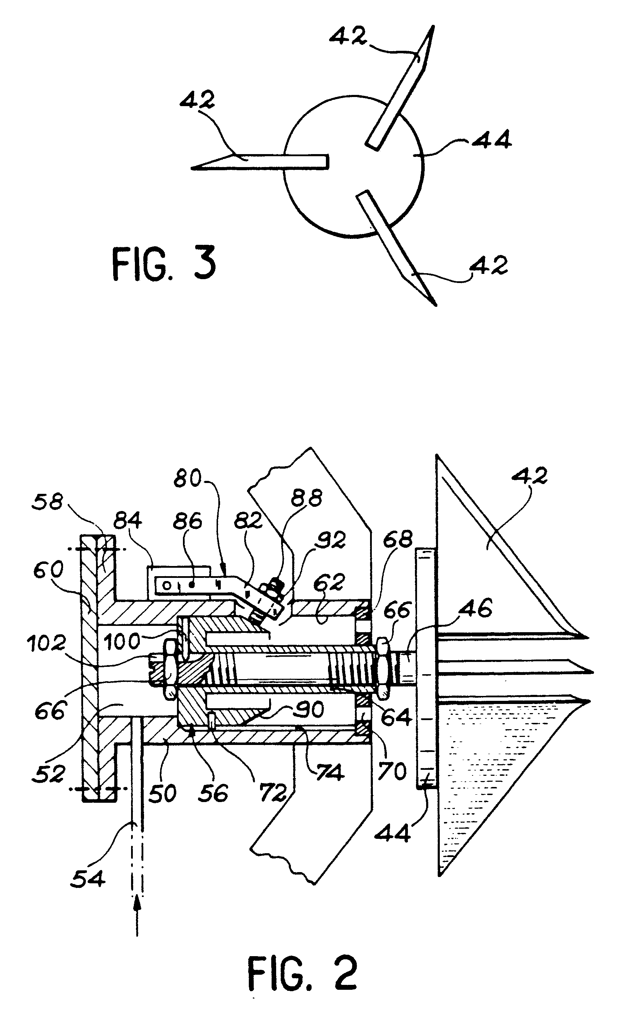

Enfin, le dispositif de sécurité conforme à l'invention comporte un couteau actif désigné par la référence générale 40. Ce couteau, qui est visible à plus grande échelle sur la figure 2, et qui est représenté en vue de bout sur la figure 3, comporte trois lames de couteau identiques 42 montées sur un plateau circulaire 44 et disposées radialement par rapport à l'axe de ce plateau. Trois couteaux ont été représentés dans l'exemple de réalisation décrit ; toutefois, il est bien évident qu'un nombre différent, par exemple supérieur, pourrait être prévu. Toutefois, la position des couteaux 42 par rapport aux couteaux 30 est choisie de telle manière qu'il n'y ait pas d'interférence entre le couteau passif et le couteau actif lors du mouvement de déplacement du couteau actif. En d'autres termes, les lames du couteau 30 doivent s'intercaler entre les lames 42 du couteau actif.

Le plateau 44 est monté solidaire de l'extrémité d'une tige filetée 46. Cette tige est reliée des moyens qui permettent de percuter la face concave de la membrane au moyen du couteau 40. Ces moyens ont été représentés en coupe sur la figure 2.

Les moyens permettant de percuter la membrane représentés sur la figure 2 comprennent essentiellement une pièce cylindrique creuse 50 présentant une forme circulaire de révolution dont l'axe est aligné avec celui du conduit 2. La pièce cylindrique 50 forme une chambre de compression 52. Des moyens d'alimentation en gaz de cette chambre, constitués par le conduit 54, sont prévus. Un piston 56 est logé dans la pièce cylindrique 50. L'extrémité de la pièce creuse 50 la plus éloignée de la membrane 20 est munie d'une bride de fixation 58 à laquelle est assemblée une plaque de fermeture 60, par exemple au moyen de boulons représentés schématiquement par des traits mixtes.

L'intérieur de la pièce creuse 50 comporte une première partie cylindrique dans laquelle débouche le conduit 54 et une seconde partie cylindrique 62 de plus grand diamètre afin de déterminer un épaulement contre lequel le piston 56 vient en butée.

Le piston 56 comporte un corps principal prolongé par une tige 64 dans laquelle est prévu un trou taraudé pour recevoir la tige filetée 46. La tige filetée 46 est en outre munie d'une rainure qui permet l'introduction d'un tournevis pour l'avancer ou la reculer. Un écrou 66 est monté à chacune des extrémités de la tige filetée de part et d'autre du piston 56. Une plaque 68 ferme l'extrémité de la pièce creuse 50 qui est située le plus près de la membrane. La plaque 68 est munie de trous 70 qui permettent la circulation des gaz afin que le déplacement du piston ne soit pas gêné par leur compression. En outre, toute rotation du piston par rapport à la pièce creuse 50 est interdite grâce à une clavette fixée à la périphérie du corps principal du piston et prise dans une rainure 74 pratiquée parallèlement à l'axe de la pièce creuse sur la paroi interne qui délimite la seconde partie 62 de l'intérieur de la pièce creuse 50.

Les deux écrous 66 permettent le réglage de la position du couteau 30 par rapport au piston et donc par rapport la membrane 20.

Des moyens mécaniques sont en outre prévus pour maintenir le piston 56 contre l'épaulement de la pièce 50. Ces moyens comportent un levier 82 dont une extrémité est articulée en rotation d'axe perpendiculaire à l'axe longitudinal de la pièce 50 sur un support 84 fixé sur la pièce creuse, à l'extérieur de celle-ci. La rotation du levier est empêchée par une goupille 86 traversant le levier 82 d'une part et s'engageant dans le support 84 d'autre part. L'extrémité libre du levier comporte un trou taraudé traversé par une vis 88 qui s'appuie sur une facette inclinée 90 du piston. Un écrou de blocage 92 est monté sur l'autre extrémité de la tige.

Le déplacement de la vis 88 par rapport au levier permet d'ajuster la position du piston à l'intérieur de la pièce creuse 50.

Toute rotation du couteau 40 par rapport au piston 56 est empêchée grâce à une seconde clavette 100 fixée dans un trou transversal du piston et en prise dans une rainure longitudinale 102 prévue dans la tige filetée 46.

On a représenté schématiquement sur la figure 4 les moyens qui permettent l'alimentation en un fluide sous pression de la chambre 52 et par suite la commande du couteau actif 40. La canalisation 54 qui débouche dans la chambre 52 est reliée à une capacité d'un fluide sous pression tel qu'un gaz, par exemple l'argon. Cette capacité a été désignée par la référence 110. Une électrovanne 112 est intercalée entre la capacité 110 et la pièce 56. Cette électrovanne peut être commandée manuellement au moyen d'un interrupteur 114 actionnant une commande électrique. La commande électrique de l'électrovanne peut encore être commandée automatique par exemple au moyen d'un détecteur de pression ou d'un détecteur d'hydrogène qui actionne l'électrovanne lorsqu'un seuil déterminé est atteint. La canalisation 54 comporte en outre une dérivation 54' sur laquelle est monté un dispositif pyrotechnique 113 qui décapsule la tuyauterie 54'.

La capacité 110 est en outre reliée à une seconde canalisation 114 dans laquelle est piquée une canalisation 116 sur laquelle est montée une électrovanne de purge qui permet de purger la capacité 110 du gaz qu'elle contient. La canalisation 114 sur laquelle est intercalée une autre électrovanne 120 permet l'alimentation en argon de la capacité 110 comme schématisé par la flèche 122.

Le fonctionnement du dispositif qui vient d'être décrit est le suivant :

Le dispositif est tout d'abord apte à fonctionner selon un mode passif. Dans ce cas, l'éclatement de la membrane 20 est déterminé uniquement par la pression amont F. Le couteau passif 30 est réglé à une position fixe. Si la pression amont F augmente au-delà d'une valeur de calcul déterminée à laquelle l'installation protégée reliée à la canalisation 8 ne doit pas être soumise, la membrane se déforme jusqu'à venir au contact du couteau 30 qui provoque sa rupture de manière classique.

Le dispositif peut également fonctionner selon un mode actif grâce au couteau 40. Tout d'abord, la distance entre le couteau 40 et la membrane 20 est réglée au moyen de la tige filetée 46 qui peut être tournée de manière à approcher ou éloigner le couteau 40 de la membrane. La position de la vis est ensuite bloquée au moyen des écrous 66. Si l'on désire obtenir l'éclatement de la membrane 20 pour une valeur de pression F nettement inférieure à la pression calculée pour le mode de fonctionnement passif, on commande le déplacement du couteau actif 40 grâce au piston 56 en alimentant en fluide sous pression la chambre de pression 52. Ceci peut être obtenu manuellement en fermant le contact électrique 114 (voir figure 4) ou au moyen d'un détecteur qui détecte la pression ou une grandeur liée à cette pression. Lorsqu'un seuil déterminé est atteint, correspondant à la pression d'éclatement recherchée, le capteur ferme l'électrovanne de telle sorte que la chambre 52 est alimentée en argon sous pression, ce qui provoque le déplacement du piston 56. La force qui s'exerce sur le piston est transmise par l'intermédiaire de la tige filetée 88 au levier 80. Lorsque la contrainte appliquée à la goupille de cisaillement 86 est suffisante, cette dernière est cisaillée, ce qui libère le piston porteur du couteau. Ce dernier percute alors la membrane 20 et initie une entaille sur celle-ci, ce qui engendre son éclatement. Le couteau 40 porté par le piston est de forme cruciforme. Son dimensionnement est réalisé de manière à engendrer des déchirures de la membrane 20 suffisamment larges pour obtenir la section de passage souhaitée.

L'alimentation de la chambre 52 en fluide sous pression peut également être commandée par l'intermédiaire de la dérivation 54' et du dispositif pyrotechnique contenu dans cette dérivation.

Par rapport aux dispositifs connus antérieurement, le dispositif de sécurité qui vient d'être décrit permet de résoudre le problème consistant dans la rupture d'une membrane de sécurité pour une pression faible dans une installation ayant un débit de charge important. Les dispositifs classiques actuellement connus tels que les soupapes ou les vannes ne permettent pas de résoudre ce problème de manière satisfaisante. En effet, les soupapes ont des débits limités et les vannes de grande taille sont très onéreuses et peuvent caviter lorsqu'elles sont soumises à de forts débits. Au contraire, le dispositif de sécurité conforme à l'invention constitue un dispositif dont la réalisation est peu onéreuse et qui permet d'ouvrir une canalisation de fort débit même pour une valeur peu importante de la pression. Dans certaines applications, ce dispositif peut remplacer une vanne manoeuvrée peu fréquemment. Il est alors nécessaire de remplacer la membrane à chaque utilisation.

**Revendications**

1. Dispositif de sécurité destiné à limiter la pression d'un fluide à une valeur prédéterminée, comprenant une membrane préformée (20) et montée à l'intérieur d'un conduit qui comprend au moins un élément modulaire creux (2) ouvert à ses deux extrémités, et pour chaque élément modulaire, des moyens d'étanchéité montés auxdites extrémités, ladite membrane préformée (20) étant montée comme obturateur étanche de l'une des extrémités dudit élément modulaire et présente une face convexe et une face concave, comprenant un couteau passif (30) monté en regard de la face convexe de la membrane (20) à une distance telle de cette face convexe qu'une pression prédéterminée exercée par ledit fluide sur la face concave de ladite membrane (20) amène cette dernière au contact du couteau (30), lequel provoque alors l'éclatement de cette membrane (20), et comprenant en outre au moins un couteau actif (40) et des moyens pour faire percuter la membrane par ledit couteau actif (40) afin de provoquer la déchirure de ladite membrane (20) lorsque la face concave de cette membrane est soumise de la part du fluide à une pression inférieure à ladite pression prédéterminée, lesdits moyens pour faire percuter la membrane (20) par le couteau actif (40) comportant une partie mobile (46) susceptible de se déplacer vers ladite membrane et le couteau actif étant rendu solidaire de cette partie mobile et ayant une position réglable par rapport à celle-ci, chacun desdits couteaux (30 et 40) comportant une pluralité de lames, caractérisé en ce que ledit couteau actif (40) est disposé additionnellement et monté en regard de la face concave de la membrane, le couteau passif (30) situé en regard de la face convexe et le couteau actif (40) situé en regard de la face concave étant montés de manière à ce que les lames du couteau passif s'intercalent entre les lames du couteau actif lorsque le couteau actif (40) percute la membrane.

2. Dispositif selon la revendication 1, caractérisé en ce que les lames sont disposées radialement par rapport à un axe longitudinal du conduit (2).

3. Dispositif selon la revendication 1, caractérisé en ce que lesdits moyens pour faire percuter la membrane par le couteau actif (40) comprennent, connu en soi,
   - une chambre (52) montée en regard de la face convexe de la membrane,
   - des moyens (110) d'alimentation en gaz de la chambre (62) pour la mise en pression de celle-ci,
   - un piston (64) qui, d'une part porte le couteau actif (40), et qui d'autre part, est prévu pour coulisser dans la chambre (52) lors de la mise en pression de celle-ci,

- des moyens mécaniques (80) prévus pour immobiliser le piston dans la chambre et pour s'effacer sous l'effet d'un déplacement du piston lors de la mise en pression de la chambre.

4. Dispositif selon la revendication 3, caractérisé en ce que, connu en soi, les lames du couteau actif (42) sont bloquées en rotation par rapport au piston et en ce que le piston (56) est bloqué en rotation par rapport à ladite chambre.

5. Dispositif selon l'une quelconque des revendications 3 à 4, caractérisé en ce que lesdits moyens pour faire percuter la membrane par les couteaux sont capotés de manière à être rendus étanches au fluide.

**Claims**

1. Safety device for limiting the pressure of a fluid to a predetermined value, incorporating a preshaped diaphragm (20) and mounted within a pipe, which has at least one modular hollow element (2) open at its two ends, and for each modular element, sealing means mounted at said ends, the preshaped diaphragm (20) being fitted as a tight closing device for one of the ends of said modular element and has a convex face and a concave face, incorporating a passive knife (30) fitted facing the convex face of the diaphragm (20) at a distance therefrom such that a predetermined pressure exerted by said fluid on the concave face of said diaphragm (20) brings the latter into contact with the knife (30), which then brings about the bursting of said diaphragm (20), whilst also having at least one active knife (40) and means for making the latter strike against the diaphragm in order to bring about the tearing of said diaphragm (20) when the concave face of said diaphragm is exposed by the fluid to a pressure below said predetermined pressure, said means for making the active knife (40) strike the diaphragm (20) having a mobile portion (46) able to move towards the said diaphragm and the active knife is rendered integral with said mobile portion and has a position regulatable with respect thereto, each of the said knives (30, 40) having plurality of blades, characterized in that said active knife (40) is additionally arranged and fitted facing the concave face of the diaphragm, the passive knife (30) located facing the convex face and the active knife (40) facing the concave face being fitted in such a way that the blades of the passive knife are intercalated between the blades of the active knife when the latter strikes the diaphragm.

2. Device according to claim 1, characterized in that the blades are position radially with respect to a longitudinal axis of the pipe (2).

3. Device according to claim 1, characterized in that said means for making the active knife (40) strike the diaphragm comprise in per se known manner a chamber (52) fitted facing the convex face of the diaphragm, means (1, 10) for supplying the chamber (62) with gas for pressurizing the latter, a piston (64) which, on the one hand carries the active knife (40), and which on the other hand is intended to slide in the chamber (52) during the pressurizing thereof and mechanical means (80) for immobilizing the piston in the chamber and for moving aside under the effect of a displacement of the piston during the pressurizing of the chamber.

4. Device according to claim 3, characterized in that in per se known manner the blades of the active knife (42) are locked in rotation with respect to the piston and in that the piston (56) is locked in rotation with respect to the said chamber.

5. Device according to either of the claims 3 and 4. characterized in that said means for making the knives strike the diaphragm are covered so as to make them tight to the fluid.

**Patentansprüche**

1. Sicherheitsvorrichtung zur Begrenzung des Drucks eines Fluides auf einen vorbestimmten Wert, enthaltend eine vorgeformte Membran (20), die im Inneren einer Leitung montiert ist, die wenigstens ein hohles Modulelement (20) enthält, das an seinen zwei Enden offen ist, und für jedes Modulelement Abdichtungsmittel, die an den genannten Enden befestigt sind, wobei die vorgeformte Membran (20) wie ein dichter Verschluß eines der Enden des Modulelements montiert ist und eine konvexe Fläche und eine konkave Fläche aufweist, mit einem passiven Messer (30), das gegenüber den konvexen Flächen der Membran (20) in einer solchen Distanz von der konvexen Fläche montiert ist, daß ein vorbestimmter, durch das Fluid auf die konkave Fläche der Membran (20) ausgeübter Druck letztere in Berührung mit dem Messer (30) bringt, was dann ein Zerbersten dieser Membran (20) hervorruft und enthaltend weiterhin wenigstens ein aktives Messer (40) und Einrichtungen, um die Membran durch dieses aktive Messer (40) zu durchstoßen, um das Zerreissen der Membran (20) hervorzurufen, wenn die konkave Fläche dieser Membran von seiten des Fluides geringeren Drucks als dem genannten vorbestimmten Druck unterworfen wird, welche Einrichtungen zum Druchstoßen der Membran (20) durch das aktive Messer (40) einen beweglichen Abschnitt (46) aufweisen, der dazu geeignet ist, sich gegen die Membran zu verstellen, und wobei das aktive Messer fest mit diesem beweglichen Abschnitt verbunden ist und eine gegenüber diesem einstellbare Position aufweist, wobei jedes dieser Messer (30 und 40) mehrere Klingen aufweist, dadurch gekennzeichnet, daß das aktive Messer (40) zusätzlich vorgesehen und gegenüber der konkaven Fläche der Membran montiert ist, wobei das der konvexen Fläche gegenüberliegende passive Messer (30) und das der konkaven Fläche gegenüberliegende aktive Messer (40) derart montiert sind, daß die Klingen des passiven Messers zwischen die Klingen des aktiven Messers eintreten, wenn das aktive Messer (40) die Membran druchstößt.

2. Vorrichtung nach Anspruch 1, dadurch gekennzeichnet, daß die Klingen radial in bezug auf eine Längsachse der Leitung (2) angeordnet sind.

3. Vorrichtung nach Anspruch 1, dadurch gekennzeichnet, daß die Einrichtungen zum Durchstoßen der Membran mittels des aktiven Messers (40) in an sich bekannter Weise enthalten:

   eine Kammer (52), die gegenüber der konvexen Fläche der Membran montiert ist,

   Einrichtungen (110) zum Einleiten eines Gases in die Kammer (62); um diese unter Druck zu setzen,

   einen Kolben (64), der einerseits das aktive Messer (40) trägt und andererseits in der Kammer (52) gleitet, wenn diese unter Druck gesetzt wird,

   mechanische Einrichtungen (80) zum Festlegen des Kolbens in der Kammer und zum sich Rückstellen unter dem Einfluß einer Verstellung des Kolbens bei der Unterdrucksetzung der Kammer.

4. Vorrichtung nach Anspruch 3, dadurch gekennzeichnet, daß in an sich bekannter Weise die Klingen des aktiven Messers (42) gegen Verdrehung gegenüber dem Kolben gesperrt sind und daß der Kolben (46) gegen Verdrehung gegenüber der genannten Kammer gesperrt ist.

5. Vorrichtung nach einem der Ansprüche 3 und 4, dadurch gekennzeichnet, daß die Einrichtungen zum Durchstoßen der Membran mittels der Messer derart abgedeckt sind, daß sie gegenüber dem Fluid abgeschlossen sind.

FIG. 1

FIG. 4

FIG. 3

FIG. 2